# FASCICULE DE BREVET EUROPEEN

(11) **EP 4 437 914 B1**
(45) Date de publication et mention de la délivrance du brevet: **21.01.2026**
(21) Numéro de dépôt: 24167031.4
(22) Date de dépôt: 27.03.2024
(51) Int. Cl.: A47J 31/44

(54) **BAC DE COLLECTE DE MARC DE CAFE ET MACHINE A CAFE COMPRENANT UN TEL BAC**
KAFFEETRESTERSAMMELBEHÄLTER UND KAFFEEMASCHINE MIT EINEM SOLCHEN BEHÄLTER
CONTAINER FOR COLLECTING COFFEE GROUNDS AND COFFEE MACHINE COMPRISING SUCH A CONTAINER

(30) Priorité: 29.03.2023 FR 2302995
(43) Date de publication de la demande: 02.10.2024
(73) Titulaire: SEB S.A., 69130 Ecully (FR)
(72) Inventeur: CHAUVET, Bernard, 69134 ECULLY CEDEX (FR); BENESTEAU, Pascal, 69134 ECULLY CEDEX (FR); GIRAUD, Jean-Baptiste, 69134 ECULLY CEDEX (FR)
(74) Mandataire: SEB Développement

(56) Documents cités:
- CA-C- 2 613 472
- DE-A1- 102012 011 199
- DE-U1- 202004 018 686
- US-A1- 2005 066 821

## Description

### Domaine technique

La présente invention se rapporte au domaine des machines à café et notamment des bacs de collecte de marc de café. De tels bacs de collecte sont propres à recevoir le marc de café sous n'importe quelle forme à savoir sous la forme de capsules usagers ou avantageusement sous la forme de cakes de marc de café, notamment lorsque la machine à café est une machine à grain automatique comprenant un broyeur intégré. Ces bacs de collecte sont destinés à être installés dans la machine à café pour recevoir le marc de café une fois que le café a été infusé et que la boisson à base de café a été délivrée à l'utilisateur par la machine à café.

### Etat de la technique

Il est connu de DE102012011199 A1 un bac de collecte de marc de café comprenant un corps principal et un sac jetable disposé à l'intérieur du corps principal et propre à recevoir le marc de café. Le sac jetable est destiné à être jeté et remplacé par un autre sac lorsqu'il est rempli de marc de café.

Un tel bac de collecte de marc de café permet de simplifier les opérations de nettoyage du bac de collecte et notamment du corps principal et de garantir la propreté du corps principal lors de l'utilisation du bac de collecte.

Cependant, l'utilisation d'un tel bac de collecte est couteuse et génératrice de déchets puisqu'un nouveau sac est nécessaire après chaque phase de vidange/nettoyage du bac de collecte de marc de café. En outre la manipulation du bac de collecte lors de l'opération de nettoyage et lors du remplacement du sac jetable est complexe car le retrait et l'insertion du sac jetable nécessite respectivement de fermer le sac jetable et de déployer le sac jetable à l'intérieur du corps principal pour qu'il occupe tout le volume utile.

### Résumé de l'invention

La présente invention vise à remédier à ces inconvénients.

Le problème technique à la base de l'invention consiste à proposer un bac de collecte à nettoyage facilité dont la manipulation, notamment lors d'une phase de vidange/nettoyage, et le coût d'utilisation sont optimisés.

A cet effet, l'invention a pour objet une machine à café telle que définie à la revendication 1.

Grâce à l'invention, la manipulation du bac de collecte de marc de café lors des phases de vidange/nettoyage est simplifiée puisque la manipulation du dispositif de collecte qui se présente sous la forme d'un tiroir est aisée pour un utilisateur qui n'as qu'à réaliser un mouvement de translation pour assemblée et désassemblée le dispositif de collecte du corps principal. En outre, le nettoyage du bac de collecte de marc de café est simplifié puisqu'en séparant le corps principal du dispositif de collecte l'utilisateur évacue l'essentiel du marc de café du bac de collecte pour le jeter et dispose ensuite d'un accès facilité aux zones les plus sales du corps principal et du dispositif de collecte pour les nettoyer. Enfin, le fait que le dispositif de collecte soit réutilisable permet d'optimiser le coût d'utilisation du bac de collecte de marc de café.

Selon des aspects avantageux mais non obligatoires de l'invention, un tel bac de collecte de marc de café peut incorporer une ou plusieurs des caractéristiques suivantes, prises dans toute combinaison techniquement admissible.

Selon une caractéristique avantageuse de l'invention, le dispositif de collecte comprend une saillie axiale s'étendant depuis le contenant de collecte de résidus et définissant une zone de préhension propre à être saisie par un utilisateur pour déplacer le dispositif de collecte par rapport au logement principal entre la position assemblée et la position désassemblée.

Un tel agencement permet de simplifier la manipulation du dispositif de collecte en rendant sa saisie par l'utilisateur simplifiée.

Selon une caractéristique avantageuse de l'invention, la hauteur du contenant de collecte de résidus est inférieure à la hauteur de la saillie axiale de préférence au moins deux fois plus petite, de préférence encore au moins trois fois plus petite.

Un tel agencement permet de simplifier l'accès à la zone de préhension et donc la manipulation du dispositif de collecte et de faciliter l'accès au contenant de collecte de résidus et donc son nettoyage une fois que le dispositif de collecte est en position désassemblée.

Selon une caractéristique avantageuse de l'invention, lorsque le dispositif de collecte est en position assemblée une extrémité supérieure de la saillie axiale formant la zone de préhension est accessible pour l'utilisateur, l'extrémité supérieure dépassant d'au moins une portion d'un bord de l'ouverture supérieure.

Un tel agencement permet de simplifier l'accès à la zone de préhension et donc la manipulation du dispositif de collecte.

Selon une caractéristique avantageuse de l'invention, le corps principal comprend une ouverture inférieure, le logement principal étant traversant et s'étendant suivant l'axe longitudinal entre l'ouverture inférieure et l'ouverture supérieure, et le contenant de collecte de résidus vient fermer l'ouverture inférieure lorsque le dispositif de collecte est en position assemblée.

Un tel agencement permet de simplifier le nettoyage du bac de collecte de marc de café. En effet cet agencement permet de simplifier l'accessibilité aux zones les plus sales du corps principal et du dispositif de collecte en fournissant un corps principal traversant et un contenant de collecte de résidus, qui forme un fond du bac de collecte, auquel l'accès est facilité lorsque le dispositif de collecte est en position désassemblée.

Selon une caractéristique avantageuse de l'invention, le corps principal comprend une ou des parois périphériques formant un contour du logement principal, la hauteur du contenant de collecte de résidus étant inférieure à la hauteur de la ou des parois périphériques, de préférence au moins trois fois plus petite.

Un tel agencement permet de dissocier le fond du bac de collecte formé par le contenant de collecte de résidus, des parois latérales du bac de collecte formées par le corps principal et ainsi de faciliter le nettoyage du bac de collecte.

Selon une caractéristique avantageuse de l'invention, le corps principal comprend une ou des parois périphériques formant un contour du logement principal, et la ou l'une des parois périphériques comprend une face extérieure munie de reliefs d'accroche d'un élément d'habillage sur ladite face extérieure.

Un tel agencement permet de faciliter l'intégration du bac de collecte de marc de café dans la machine café et de dissocier l'aspect fonctionnel de l'aspect esthétique. Ainsi le corps principal peut être réalisé dans un matériau propre à être en contact régulier avec de l'eau tandis que l'habillage peut être réalisé dans un matériau plus noble sensible au contact répété à l'eau.

Selon une caractéristique avantageuse de l'invention, le logement principal est muni d'au moins un rail de guidage en translation du dispositif de collecte propre à coopérer avec une paroi latérale du contenant de collecte de résidus.

Un tel agencement permet de faciliter le déplacement du dispositif de collecte entre ses position assemblée et désassemblée et ainsi de faciliter les opérations de nettoyage/vidange du bac de collecte de marc de café.

Selon une caractéristique avantageuse de l'invention, le corps principal comprend une ou des parois périphériques formant un contour du logement principal, et le contenant de collecte de résidus comprend une ou des parois latérales propres à frotter contre une face interne de la ou les parois périphériques lorsque le dispositif de collecte est déplacé de la position assemblée à la position désassemblée.

Un tel agencement permet de faciliter l'extraction du marc de café du bac de collecte lors de l'opération de vidange de celui-ci et ainsi de retirer la majorité du marc de café du bac de collecte lorsque le dispositif de collecte est déplacé de la position assemblée à la position désassemblée. Ainsi l'opération de vidange mais aussi l'opération de nettoyage du bac de collecte sont simplifiées.

Selon une caractéristique avantageuse de l'invention, le corps principal comprend une ou des parois périphériques formant un contour du logement principal, et la ou l'une des parois périphériques comprend une face extérieure munie d'une proéminence axiale en saillie de la face extérieure, la proéminence axiale étant propre à coopérer avec un organe de détection de la connexion du bac de collecte à la machine à café.

Un tel agencement permet de réaliser la fonction de détection du bac de collecte de marc de café de manière simplifiée et de garantir qu'un café est réalisé par la machine à café uniquement lorsque le bac de collecte de marc de café est installé dans la machine à café.

Selon une caractéristique avantageuse de l'invention, le bac de collecte de marc de café est fixé de manière amovible à la machine à café.

Selon une caractéristique avantageuse de l'invention, le bac de collecte de marc de café est intégré dans un logement de la machine à café.

Selon une caractéristique avantageuse de l'invention, la machine à café comprend également un organe de détection propre à détecter la présence du bac de collecte de marc de café dans la machine à café.

Selon une caractéristique avantageuse de l'invention, le bac de collecte de marc de café est intégré dans un logement de la machine à café accessible depuis une face avant de la machine à café ou depuis une face latérale de la machine à café.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une représentation très schématique d'une machine à café comprenant un bac de collecte de marc de café conforme à un mode de réalisation de l'invention ;
La figure 2 est une vue en perspective d'un bac de collecte de marc de café selon un premier mode de réalisation de l'invention ;
La figure 3 est une vue en perspective de dessus du bac de collecte de la figure 2 ;
La figure 4 est une vue en éclaté de dessus du bac de collecte des figures 2 et 3 ;
La figure 5 est une vue en perspective d'un bac de collecte de marc de café selon un deuxième mode de réalisation de l'invention ;
La figure 6 est une vue en perspective de dessus du bac de collecte de la figure 5;
La figure 7 est une vue en éclaté de dessus du bac de collecte des figures 5 et 6 ;
La figure 8 est une vue en éclaté du bac de collecte des figures 5 et 6 dans laquelle un élément d'habillage est omis

Seuls les éléments nécessaires à la compréhension de l'invention ont été représentés. Pour faciliter la lecture des dessins, les mêmes éléments portent les mêmes références d'une figure à l'autre.

On notera que dans ce document, les termes « horizontal », « vertical », « inférieur », « supérieur », « haut », « bas », « avant », « arrière », « longitudinal », « transversal », employés pour décrire le bac de collecte de marc de café font référence à ce dispositif en situation d'usage, notamment lorsqu'il est installé dans/ fixé à une machine à café de sorte à recevoir le marc de café une fois que le café a été infusé par la machine.

En outre, les termes « interne » et « externe » ou « intérieur » et extérieur » sont définis par rapport à un volume interne du bac de collecte destiné à recevoir le marc de café. Un élément ou une face interne ou intérieur est positionné en regard du volume interne tandis qu'un élément ou une face externe ou extérieur est situé en regard de l'extérieur au volume interne.

De plus les termes « droit » et « gauche » employés pour décrire le bac de collecte de marc de café font référence à ce dispositif en situation d'usage lorsque la partie « avant » est située en regard de l'utilisateur.

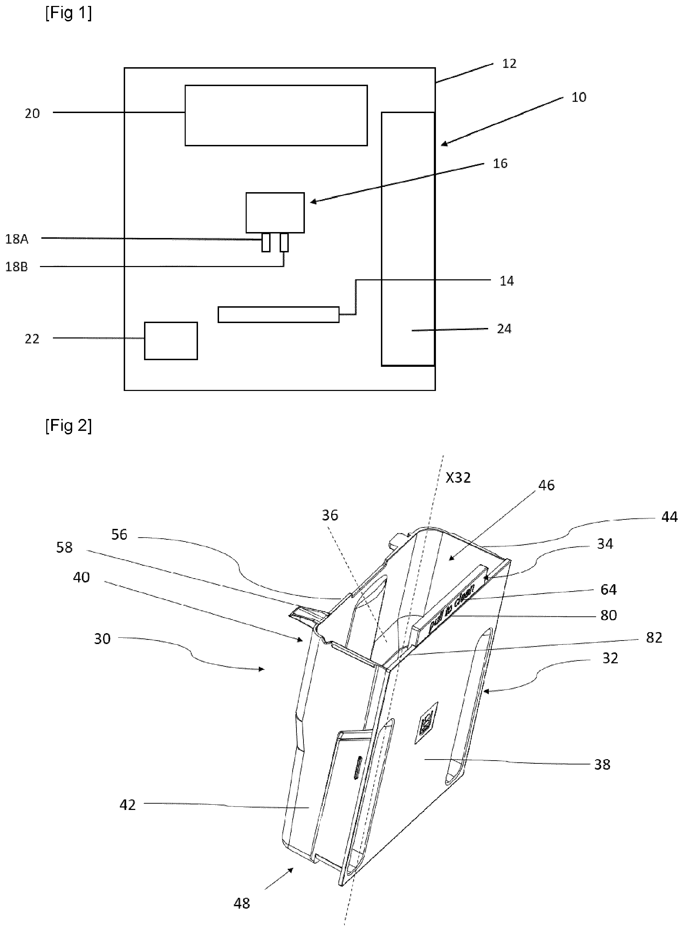

La machine à café 10, représentée de manière très schématique à la figure 1, est avantageusement une machine à café 10 automatique comprenant un broyeur intégré.

La machine à café 10 comporte un bâti 12, un support de récipient 14 sur lequel un récipient peut être disposé et une tête de distribution 16. La tête de distribution 16 comporte au moins une buse, de préférence deux buses 18A, 18B, de sortie de café. La machine à café 10 comporte un circuit de commande 20 pour gérer la réalisation d'une boisson à partir des instructions données par un utilisateur. La machine à café 10 comporte une chaudière 22 produisant de l'eau chaude et/ou de la vapeur et un réservoir non représenté formant une réserve en eau froide. Le réservoir permet d'alimenter la chaudière 22 pour produire de l'eau chaude et/ou de la vapeur.

De manière connue et non représentée, la machine à café 10 comprend avantageusement un réservoir de grains de café, un moulin à grains automatique et une chambre d'infusion propre à recevoir les grains de café moulus et à être alimentée en eau chaude par la chaudière 22. La chambre d'infusion est reliée fluidiquement à la tête de distribution 16 de manière à ce que la machine à café 10 soit propre à distribuer une boisson à base de café au niveau des buses de sortie de café 18A, 18B.

Conformément à l'invention, la machine à café comprend un bac de collecte de marc de café 24 propre à être fixé de manière amovible à la machine à café 10. Le bac de collecte de marc de café 24 est configuré pour recevoir le marc de café une fois que le café a été infusé et avantageusement que la boisson à base de café a été délivrée à l'utilisateur par la machine à café 10.

Le bac de collecte de marc de café 24 est propre à être retiré de la machine à café 10 pour être vidé et nettoyé puis reconnecté ensuite à la machine à café 10.

Avantageusement, la machine à café 10 comprend également un organe de détection, non représenté, propre à détecter la présence du bac de collecte 24 dans la machine à café 10, c'est-à-dire la connexion du bac de collecte 24 à la machine à café 10.

Avantageusement le circuit de commande 20 est propre à interdire la réalisation d'une boisson par la machine tant que l'organe de détection détecte l'absence du bac de collecte 24.

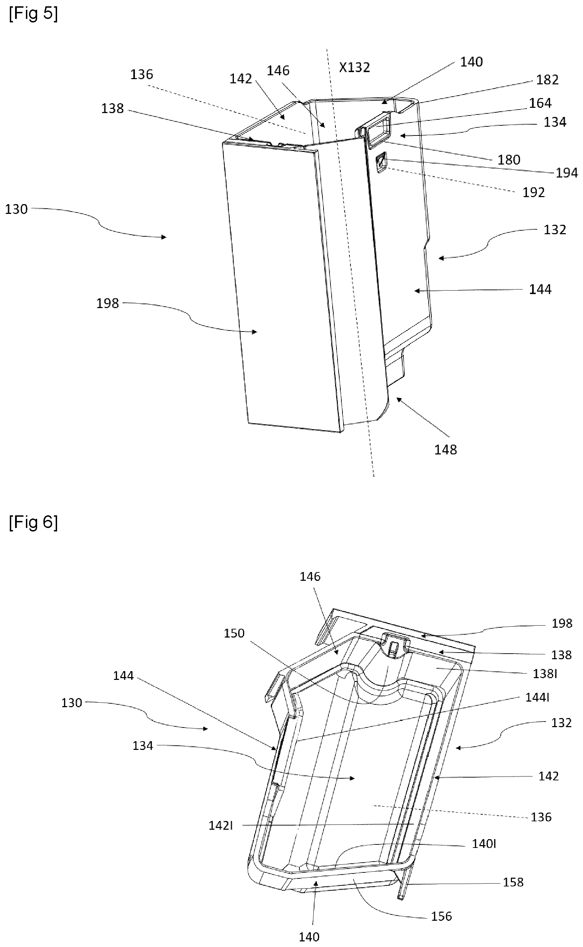

Le bac de collecte de marc de café 24 représenté schématiquement à la figure 1 est soit conforme au premier mode de réalisation de l'invention représenté aux figures 2 à 4 sur lesquelles il porte alors la référence 30, soit conforme au deuxième mode de réalisation de l'invention représenté aux figures 5 à 8 sur lesquelles il porte alors la référence 130.

Le bac de collecte 30 représenté aux figures 2 à 4 est avantageusement propre à être intégré dans un logement de la machine à café 10 non représenté accessible depuis une face latérale de la machine à café 10.

Le bac de collecte de marc de café 30 représenté aux figures 2 à 4 comprend un corps principal 32 et un dispositif de collecte 34 propre à être reçu dans le corps principal 32.

Le corps principal 32 et le dispositif de collecte 34 sont deux pièces distinctes propres à être assemblées l'une à l'autre.

Plus précisément le dispositif de collecte 34 est formé par un tiroir propre à coulisser dans le corps principal 32 entre une position assemblée et une position désassemblée.

Le corps principal 32 définit un logement principal 36 s'étendant suivant un axe longitudinal X32 sensiblement vertical dans lequel le dispositif de collecte 34 est propre à coulisser/translater entre la position assemblée et la position désassemblée.

Le corps principal 32 comprend notamment une pluralité de parois périphériques 38, 40, 42, 44 formant un contour fermé du logement principal 36 et définissant notamment un volume interne du corps principal 32.

Plus précisément, le corps principal 32 comprend une paroi périphérique avant 38, une paroi périphérique arrière 40, une paroi périphérique gauche 42 et une paroi périphérique droite 44 s'étendant suivant l'axe longitudinal X32.

En variante non représentée, le corps principal 32 comprend une paroi périphérique continue par exemple en forme de cylindre à base circulaire.

Le corps principal 32 comprend également une ouverture supérieure 46 d'accès au logement principal 36.

Avantageusement et comme représenté sur les figures 2 à 4 le corps principal 32 comprend également une ouverture inférieure 48. Le logement principal 36 est alors traversant et s'étend suivant l'axe longitudinal X32 entre l'ouverture inférieure 48 et l'ouverture supérieure 46.

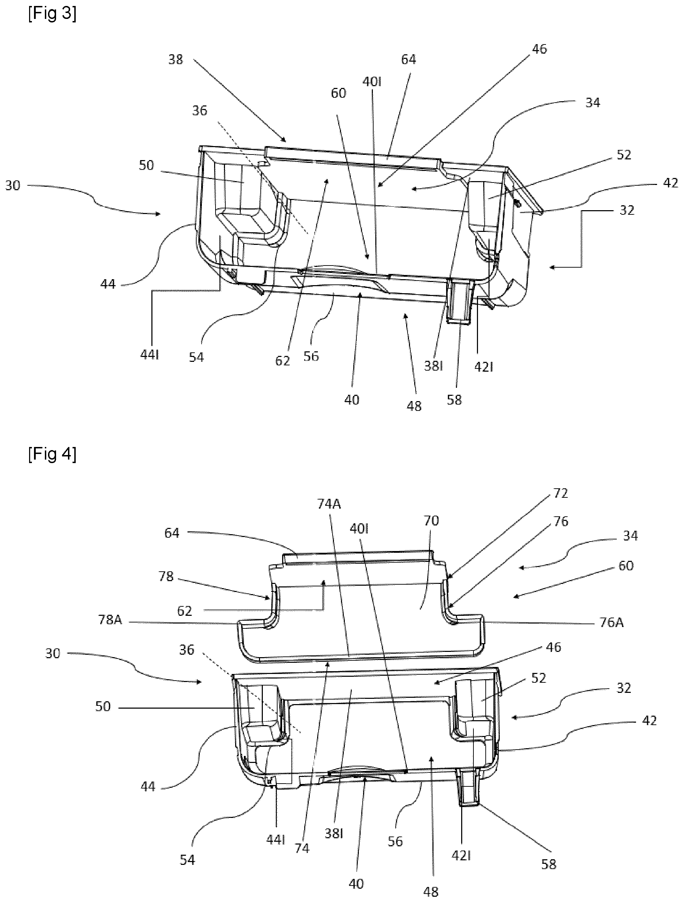

Le logement principal 36 est muni de deux rails de guidage 50, 52, visibles aux figures 3 et 4, propres à guider en translation le dispositif de collecte 34.

Les rails de guidage 50, 52 sont positionnés respectivement à un coin arrière droit et à un coin arrière gauche du logement principal 36 et s'étendent de préférence sur une hauteur, mesurée parallèlement à l'axe longitudinal X32 comprise entre 50% et 100% de la hauteur du corps principal 32.

Le corps principal 32 comprend sur un contour de l'ouverture inférieure 48 une surface de butée 54 propre à bloquer la translation vers le bas du dispositif de collecte 34. Avantageusement la surface de butée 54 s'étend sensiblement perpendiculairement aux parois périphériques 38, 40, 42, 44.

Avantageusement, la paroi périphérique arrière 40 comprend une face extérieure 56 munie d'une proéminence axiale 58 en saillie de la face extérieure 56. La proéminence axiale 58 est propre à coopérer avec l'organe de détection lorsque le bac de collecte 30 est installé dans la machine à café 10. L'organe de détection est par exemple un détecteur de présence, tel un interrupteur propre à être activé/déplacé par la proéminence axiale 58 lorsque le bac de collecte 30 est connecté à la machine à café 10.

Le dispositif de collecte 34 est propre à être reçu dans le logement principal 36 et est un dispositif de collecte 34 réutilisable.

En d'autres termes, le dispositif de collecte 34 est propre à être réutilisé c'est à dire réinsérer par l'utilisateur dans le corps principal 32 une fois qu'il a été retiré du corps principal pour vider et/ou nettoyer le bac de collecte de marc de café 30.

Le dispositif de collecte 34 comprend un contenant de collecte de résidus 60.

Le dispositif de collecte 34 comprend également une saillie axiale 62 s'étendant depuis le contenant de collecte de résidus 60, selon un axe parallèle à l'axe longitudinal X32, et définissant une zone de préhension 64 du dispositif de collecte 34.

La zone de préhension 64 est propre à être saisie par l'utilisateur pour déplacer le dispositif de collecte 34 par rapport au logement principal 36 entre la position assemblée et la position désassemblée.

Plus précisément la saillie axiale 62 comprend une extrémité supérieure qui forme la zone de préhension 64 et une extrémité inférieure rattachée au contenant de collecte de résidus 60.

Le contenant de collecte de résidus 60 visible aux figures 3 et 4 comprend un fond 70 et une pluralité de parois latérales 72, 74, 76, 78 s'étendant parallèlement à l'axe longitudinal X32 depuis le fond 70.

Plus précisément, le contenant de collecte de résidus 60 comprend une paroi latérale arrière 74, une paroi latérale avant 72, une paroi latérale gauche 76 et une paroi latérale droite 78.

Avantageusement, la saillie axiale 62 s'étend dans la continuité de la paroi latérale avant 72. La saillie axiale 62 et la paroi latérale avant 72 sont par exemple formées par la même pièce. De préférence, la saillie axiale 62 est rattachée au contenant de collecte de résidus 60 via son extrémité inférieure uniquement au niveau de la paroi latérale avant 72 et notamment d'un bord supérieur de la paroi latérale avant 72.

Avantageusement les parois latérales 72, 74, 76, 78 ont sensiblement la même hauteur et forme un contenant de collecte de résidus de hauteur constante.

Les parois latérales 72, 74, 76, 78, sont propres à frotter contre une face interne 38I, 401, 421, 441 des parois périphériques 38, 40, 42, 44 lorsque le dispositif de collecte 34 est déplacé de la position assemblée à la position désassemblée.

La saillie axiale 62 est en contact plan avec la face interne 381.

Avantageusement, un bord supérieur respectif 74A, 76A, 78A des parois latérales arrière 74, gauche 76 et droite 78 est propre à frotter respectivement contre la face interne 401, 421, 441 lorsque le dispositif de collecte 34 est déplacé de la position assemblée à la position désassemblée.

Avantageusement les bords supérieurs 74A, 76A, 78A sont propres à frotter respectivement contre les faces interne 401, 421, 441 lorsque le dispositif de collecte 34 est déplacé de la position assemblée à la position désassemblée sur une hauteur supérieure à la moitié de la hauteur du corps principal 32, c'est-à-dire comprise entre le moitié de la hauteur du corps principal 32 et la hauteur du corps principal 32.

Chaque rail de guidage 50, 52 est propre à coopérer avec une paroi latérale respective 78, 76 du contenant de collecte de résidus 60. Le rail de guidage 50 est notamment propre à coopérer avec la paroi latérale droite 78 qui présente une portion ayant une section transversale en forme de L inversé et le rail de guidage 52 est notamment propre à coopérer avec la paroi latérale gauche 76 qui présente également une portion ayant une section transversale en forme de L.

La hauteur du contenant de collecte de résidus 60 est inférieure à la hauteur de la saillie axiale 62 de préférence au moins deux fois plus petite, de préférence encore au moins trois fois plus petite.

La hauteur du contenant de collecte de résidus 60 est également inférieure à la hauteur de la ou des parois périphériques 38, 40, 42, 44, de préférence au moins trois fois plus petite.

En position assemblée le contenant de collecte de résidus 60 est reçu dans le logement principal 36.

Plus précisément, en position assemblée du dispositif de collecte 34, le contenant de collecte de résidus 60 vient fermer l'ouverture inférieure 48 et est avantageusement en butée contre la surface de butée 54.

En position désassemblée du dispositif de collecte 34, le contenant de collecte de résidus 60 est retiré du logement principal 36 au travers de l'ouverture supérieure 46.

Lorsque le dispositif de collecte 34 est en position assemblée l'extrémité supérieure de la saillie axiale 62 formant la zone de préhension 64 est accessible pour l'utilisateur. A cet effet, l'extrémité supérieure dépasse d'une portion 80 d'un bord de l'ouverture supérieure 46, notamment du bord supérieur 82 de la paroi périphérique avant 38.

L'opération de nettoyage/vidange du bac de collecte de marc de café 30 sera décrite ci-après afin de mieux comprendre les avantages liés à son architecture décrite-ci-dessus.

Dans une première étape l'utilisateur sépare le bac de collecte 30 de la machine à café 10. Ensuite, il se place au-dessus d'une poubelle, saisi le dispositif de collecte à l'aide de la zone de préhension et déplace le dispositif de collecte 34 de la position assemblée à la position désassemblée au travers de l'ouverture supérieure 46. Lors du déplacement du dispositif de collecte 34 les bords supérieurs 74A, 76A, 78A frottent respectivement contre les faces internes 401, 421, 44I de sorte que l'extraction du dispositif de collecte 34 permet d'évacuer dans la poubelle la très grande majorité du marc de café du volume interne du bac collecte 30 et notamment du corps principal 32. Une fois le dispositif de collecte en position désassemblée, le contenant de collecte de résidus 60 est vidé dans la poubelle et le dispositif de collecte 34 et le corps principal 32 sont séparés l'un de l'autre. Ensuite, l'utilisateur peut nettoyer séparément le dispositif de collecte 34 et le corps principal 32 en ayant facilement accès aux zones les plus sales puisque le corps principal 32 est traversant et la hauteur du bac de collecte de résidus 60 est réduite. Le nettoyage du bac de collecte de marc de café 30 est ainsi simplifié et amélioré. Une fois le nettoyage finalisé l'utilisateur peut déplacer le dispositif de collecte 34 de la position désassemblée à la position assemblée, le fond 70 ventant en butée contre la surface de butée 54, et réinstaller le bac de collecte 30 dans la machine à café 10.

Le bac de collecte de marc de café 130 représenté aux figures 5 à 8 est conforme au deuxième mode de réalisation de l'invention.

Dans la description de ce deuxième mode de réalisation les éléments similaires ou ayant une fonction similaire ne seront pas décrits à nouveau en détail et porteront la même référence que dans le premier mode de réalisation augmentée du nombre 100. Seuls les éléments différenciants par rapport au premier mode de réalisation seront décrits en détail dans la description du deuxième mode de réalisation.

Le bac de collecte de marc de café 130 comprend un corps principal 132 et un dispositif de collecte 134 propre à être reçu dans le corps principal 132.

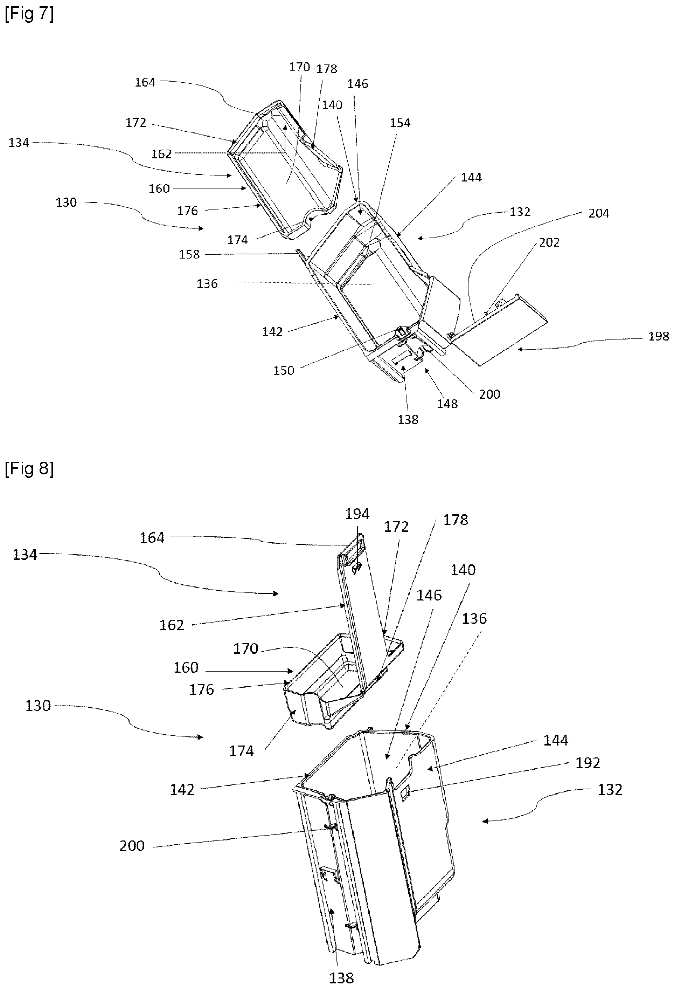

Comme dans le premier mode de réalisation, le corps principal 132 définit un logement principal 136 s'étendant suivant un axe longitudinal X132 sensiblement vertical dans lequel le dispositif de collecte 134 est propre à coulisser/translater entre la position assemblée et la position désassemblée. De même, le corps principal 132 comprend une paroi périphérique avant 138, une paroi périphérique arrière 140, une paroi périphérique gauche 142 et une paroi périphérique droite 144 s'étendant suivant l'axe longitudinal X132, ainsi qu'une proéminence axiale 158 en saillie de la face extérieure 156 de la paroi périphérique arrière 140. Le corps principal 132 comprend également, comme dans le premier mode de réalisation une ouverture supérieure 146 et une ouverture inférieure 148 et sur un contour de l'ouverture inférieure 148 une surface de butée 154 visible à la figure 7.

De manière analogue au premier mode de réalisation, le dispositif de collecte 134 est propre à être reçu dans le logement principal 136 et est un dispositif de collecte 134 réutilisable. Le dispositif de collecte 134 comprend un contenant de collecte de résidus 160 et une saillie axiale 162 s'étendant depuis le contenant de collecte de résidus 160 et définissant la zone de préhension 164 du dispositif de collecte 134. En position assemblée, le contenant de collecte de résidus 160 vient fermer l'ouverture inférieure 148 et est avantageusement en butée contre la surface de butée 154.

De même, le contenant de collecte de résidus 160 comprend un fond 170 et une paroi latérale arrière 174, une paroi latérale avant 172, une paroi latérale gauche 176 et une paroi latérale droite 178. Les parois latérales 172, 174, 176, 178, sont propres à frotter contre une face interne 138I, 1401, 1421, 144I des parois périphériques 138, 140, 142, 144 lorsque le dispositif de collecte 134 est déplacé de la position assemblée à la position désassemblée.

Le logement principal 136 est muni d'un unique rail de guidage 150 propres à guider en translation le dispositif de collecte 134. Le rail de guidage 150 à une section transversale en forme d'arc de cercle. Le rail de guidage 150 est notamment positionné sur une face interne de la paroi périphérique avant 138. Le rail de guidage 50 est notamment propre à coopérer avec la paroi latérale avant 172 qui présente également une portion ayant une section transversale en forme d'arc de cercle.

Dans l'exemple représenté, Le rail de guidage 150 s'étend sur une hauteur, mesurée parallèlement à l'axe longitudinal X132 comprise entre 50% et 100% de la hauteur du corps principal 132, de préférence égale à 100%.

Lorsque le dispositif de collecte 134 est en position assemblée une extrémité supérieure de la saillie axiale 162 formant une zone de préhension 164 est accessible pour l'utilisateur. A cet effet, comme visible à la figure 5, l'extrémité supérieure dépasse d'une portion 180 d'un bord de l'ouverture supérieure 146.

Dans le deuxième mode de réalisation, l'extrémité supérieure dépasse de la portion 180 du bord supérieur 182 de la paroi périphérique droite 144. Plus précisément le bord supérieur 182 comprend une encoche de réception de l'extrémité supérieure qui forme la zone de préhension 164 qui est alors accessible pour l'utilisateur.

De plus, la paroi périphérique droite 144 comprend également un logement d'accueil 192 pour un organe de fixation 194 du dispositif de collecte 134 au corps principal 132. Le logement d'accueil 192 est avantageusement traversant et l'organe de fixation 194 est positionné sur une face externe de la saillie axiale 162. Ainsi lorsque le dispositif de collecte 134 est en position assemblée l'organe de fixation 194 est reçu dans le logement d'accueil 192.

La saillie axiale 162 s'étend dans la continuité de la paroi latérale droite 178. Avantageusement la saillie axiale 162 et la paroi latérale droite 178 sont formées dans la même pièce.

Le bac de collecte 130 comprend également, à la différence du premier mode de réalisation un élément d'habillage 198 propre à être fixé au corps principal 132.

A cet effet, le corps principal 132 comprend sur une face extérieure de sa paroi périphérique avant 138 des reliefs d'accroche 200 propre à coopérer avec des éléments d'accroche correspondants 202 positionnés sur une face arrière 204 de l'élément d'habillage 198.

Le bac de collecte 130 est avantageusement propre à être intégré dans un logement non représenté accessible depuis une face avant de la machine à café 10. Ainsi, l'habillage 198 forme une partie de la façade avant de la machine à café.

L'opération de nettoyage/vidange du bac de collecte de marc de café 130 est globalement similaire à celle du bac de collecte 30.

Les éléments différenciants sont une étape de déverrouillage par l'utilisateur de l'organe de fixation 194 par rapport au logement d'accueil 192 avant de pouvoir déplacer le dispositif de collecte 134 de la position assemblée à la position désassemblée et une étape optionnelle de séparation de l'élément d'habillage 198 du corps principal 132 avant de réaliser un nettoyage/rinçage du corps principal 132.

Bien entendu, l'invention n'est nullement limitée au mode de réalisation décrit et illustré qui n'a été donné qu'à titre d'exemple.

## Revendications

1. Machine à café (10) comportant un bac de collecte de marc de café (24, 30, 130) configuré pour recevoir le marc de café une fois que le café a été infusé, le bac de collecte de marc de café (24, 30, 130) comprenant :
- un corps principal (32, 132) définissant un logement principal (36 , 136) s'étendant suivant un axe longitudinal (X32, X132) et comprenant une ouverture supérieure (46, 146) d'accès au logement principal (36, 136),
- un dispositif de collecte (34, 134) propre à être reçu dans le logement principal (36, 136) et comprenant un contenant de collecte de résidus (60, 160), le dispositif de collecte (34, 134) étant propre à être déplacé par rapport au logement principal (36, 136) entre une position assemblée dans laquelle le contenant de collecte de résidus (60, 160) est reçu dans le logement principal (36, 136) et une position désassemblée où le contenant de collecte de résidus (60, 160) est retiré du logement principal (36, 136) au travers de l'ouverture supérieure (46, 146),
**caractérisée en ce que** le dispositif de collecte (34, 134) est réutilisable et est formé par un tiroir propre à coulisser dans le logement principal (36, 136) entre la position assemblée et la position désassemblée.

2. Machine à café (10) selon la revendication 1, dans laquelle le dispositif de collecte (34, 134) comprend une saillie axiale (62, 162) s'étendant depuis le contenant de collecte de résidus (60, 160) et définissant une zone de préhension (64, 164) propre à être saisie par un utilisateur pour déplacer le dispositif de collecte (34, 134) par rapport au logement principal (36, 136) entre la position assemblée et la position désassemblée.

3. Machine à café (10) selon la revendication 2, dans laquelle la hauteur du contenant de collecte de résidus (60, 160) est inférieure à la hauteur de la saillie axiale (62, 162) de préférence au moins deux fois plus petite, de préférence encore au moins trois fois plus petite.

4. Machine à café (10) selon la revendication 2 ou 3, dans laquelle lorsque le dispositif de collecte (34, 134) est en position assemblée une extrémité supérieure de la saillie axiale (62, 162) formant la zone de préhension (64, 164) est accessible pour l'utilisateur, l'extrémité supérieure dépassant d'au moins une portion (80, 180) d'un bord (82, 182) de l'ouverture supérieure (46, 146).

5. Machine à café (10) selon l'une quelconque des revendications précédentes, dans laquelle le corps principal (32, 132) comprend une ouverture inférieure (48, 148), le logement principal (36, 136) étant traversant et s'étendant suivant l'axe longitudinal (X32, X132) entre l'ouverture inférieure (48, 148) et l'ouverture supérieure (46, 146), et dans laquelle le contenant de collecte de résidus (60, 160) vient fermer l'ouverture inférieure (48, 148) lorsque le dispositif de collecte (34, 134) est en position assemblée.

6. Machine à café (10) selon l'une quelconque des revendications précédentes, dans laquelle le corps principal (32, 132) comprend une ou des parois périphériques (38, 40, 42, 44, 138, 140, 142, 144) formant un contour du logement principal (36, 136), la hauteur du contenant de collecte de résidus (60, 160) étant inférieure à la hauteur de la ou des parois périphériques (38, 40, 42, 44, 138, 140, 142, 144), de préférence au moins trois fois plus petite.

7. Machine à café (10) selon l'une quelconque des revendications précédentes, dans laquelle le corps principal (132) comprend une ou des parois périphériques (138, 140, 142, 144) formant un contour du logement principal (136), et dans laquelle la ou l'une des parois périphériques (138, 140, 142, 144) comprend une face extérieure munie de reliefs d'accroche (200) d'un élément d'habillage (198) sur ladite face extérieure.

8. Machine à café (10) selon l'une quelconque des revendications précédentes, dans laquelle le logement principal (36, 136) est muni d'au moins un rail (50, 52, 150) de guidage en translation du dispositif de collecte (34, 134) propre à coopérer avec une paroi latérale (72, 74, 76, 78, 172, 174, 176, 178) du contenant de collecte de résidus (60, 160).

9. Machine à café (10) selon l'une quelconque des revendications précédentes, dans laquelle le corps principal (32, 132) comprend une ou des parois périphériques (38, 40, 42, 44,138, 140, 142, 144) formant un contour du logement principal (36, 136), et dans laquelle le contenant de collecte de résidus (60, 160) comprend une ou des parois latérales (72, 74, 76, 78, 172, 174, 176, 178) propres à frotter contre une face interne (381, 401, 421, 441,1381, 1401, 1421, de la ou les parois périphériques (38, 40, 42, 44,138, 140, 142, 144) lorsque le dispositif de collecte (34, 134) est déplacé de la position assemblée à la position désassemblée.

## Patentansprüche

1. Kaffeemaschine (10), die einen Behälter zur Sammlung des Kaffeesatzes (24, 30, 130) umfasst, konfiguriert um den Kaffeesatz zu empfangen, nachdem der Kaffee gebrüht wurde, wobei der Behälter zur Sammlung des Kaffeesatzes (24, 30, 130) umfasst:
• einen Hauptkörper (32, 132), der ein Hauptgehäuse (36, 136) definiert, das sich entlang einer Längsachse (X32, X132) erstreckt und eine obere Öffnung (46, 146) zum Zugang zum Hauptgehäuse (36, 136) umfasst,
• eine Sammelvorrichtung (34, 134), die geeignet ist, im Hauptgehäuse (36, 136) aufgenommen zu werden und einen Behälter zur Sammlung von Rückständen (60, 160) umfasst, wobei die Sammelvorrichtung (34, 134) geeignet ist, im Vergleich zum Hauptgehäuse (36, 136) zwischen einer zusammengestellten Position, in der der Behälter zur Sammlung von Rückständen (60, 160) im Hauptgehäuse (36, 136) aufgenommen wird, und einer zerlegten Position, in der der Behälter zur Sammlung von Rückständen (60, 160) aus dem Hauptgehäuse (36, 136) durch die obere Öffnung (46, 146) entfernt wird, bewegt zu werden,
**dadurch gekennzeichnet, dass** die Sammelvorrichtung (34, 134) wiederverwendbar ist und aus einem Schubfach besteht, das geeignet ist, im Hauptgehäuse (36, 136) zwischen der zusammengestellten und der zerlegten Position zu gleiten.

2. Kaffeemaschine (10) nach Anspruch 1, wobei die Sammelvorrichtung (34, 134) eine axiale Auslegung (62, 162) umfasst, die sich vom Behälter zur Sammlung von Rückständen (60, 160) erstreckt und einen Greifbereich (64, 164) definiert, der geeignet ist, von einem Benutzer ergriffen zu werden, um die Sammelvorrichtung (34, 134) im Vergleich zum Hauptgehäuse (36, 136) zwischen der zusammengestellten und der zerlegten Position zu bewegen.

3. Kaffeemaschine (10) nach Anspruch 2, wobei die Höhe des Behälters zur Sammlung von Rückständen (60, 160) kleiner als die Höhe der axialen Auslegung (62, 162) ist, vorzugsweise mindestens zweimal kleiner, vorzugsweise sogar mindestens drei Mal kleiner.

4. Kaffeemaschine (10) nach Anspruch 2 oder 3, wobei die obere Ende der axialen Auslegung (62, 162), die den Greifbereich (64, 164) bildet, zugänglich für den Benutzer ist, wenn die Sammelvorrichtung (34, 134) in der zusammengestellten Position ist, wobei die obere Ende mindestens einen Abschnitt (80, 180) über einen Rand (82, 182) der oberen Öffnung (46, 146) hinausragt.

5. Kaffeemaschine (10) nach einem der vorangegangenen Ansprüche, wobei der Hauptkörper (32, 132) eine untere Öffnung (48, 148) umfasst, das Hauptgehäuse (36, 136) durchgängig ist und sich entlang der Längsachse (X32, X132) zwischen der unteren Öffnung (48, 148) und der oberen Öffnung (46, 146) erstreckt, und wobei der Behälter zur Sammlung von Rückständen (60, 160) die untere Öffnung (48, 148) verschließt, wenn die Sammelvorrichtung (34, 134) in der zusammengestellten Position ist.

6. Kaffeemaschine (10) nach einem der vorangegangenen Ansprüche, wobei der Hauptkörper (32, 132) eine oder mehrere periphere Wände (38, 40, 42, 44, 138, 140, 142, 144) umfasst, die einen Umriss des Hauptgehäuses (36, 136) bilden, wobei die Höhe des Behälters zur Sammlung von Rückständen (60, 160) kleiner ist als die Höhe der peripheren Wand(en) (38, 40, 42, 44, 138, 140, 142, 144), vorzugsweise mindestens dreimal kleiner.

7. Kaffeemaschine (10) nach einem der vorangegangenen Ansprüche, wobei der Hauptkörper (132) eine oder mehrere periphere Wände (138, 140, 142, 144) umfasst, die einen Umriss des Hauptgehäuses (136) bilden, und wobei eine oder mehrere der peripheren Wände (138, 140, 142, 144) eine Außenfläche mit Befestigungsreliefs (200) für ein Verkleidungselement (198) auf dieser Außenfläche umranden.

8. Kaffeemaschine (10) nach einem der vorangegangenen Ansprüche, wobei das Hauptgehäuse (36, 136) mit mindestens einer Führungsschiene (50, 52, 150) ausgestattet ist, zur translationalen Führung der Sammelvorrichtung (34, 134) geeignet, welche mit einer Seitenwand (72, 74, 76, 78, 172, 174, 176, 178) des Behälters zur Sammlung von Rückständen (60, 160) kooperiert.

9. Kaffeemaschine (10) nach einem der vorangegangenen Ansprüche, wobei der Hauptkörper (32, 132) eine oder mehrere periphere Wände (38, 40, 42, 44, 138, 140, 142, 144) umfasst, die einen Umriss des Hauptgehäuses (36, 136) bilden, und wobei der Behälter zur Sammlung von Rückständen (60, 160) eine oder mehrere Seitenwände (72, 74, 76, 78, 172, 174, 176, 178) umfasst, geeignet, um gegen ein Innenfläche (381, 40I, 42I, 44I, 1381, 1401, 1421, 1441) der peripheren Wand(en) (38, 40, 42, 44, 138, 140, 142, 144) zu reiben, wenn die Sammelvorrichtung (34, 134) von der zusammengestellten zu der zerlegten Position bewegt wird.

## Claims

1. Coffee machine (10) comprising a coffee grounds collection container (24, 30, 130) configured to receive coffee grounds after the coffee has been brewed, the coffee grounds collection container (24, 30, 130) including:
• a main body (32, 132) defining a main housing (36, 136) extending along a longitudinal axis (X32, X132) and comprising a top opening (46, 146) providing access to the main housing (36, 136),
• a collection device (34, 134) suitable to be received in the main housing (36, 136) and comprising a residue collection container (60, 160), the collection device (34, 134) being configured to be moved relative to the main housing (36, 136) between an assembled position wherein the residue collection container (60, 160) is received in the main housing (36, 136) and a disassembled position wherein the residue collection container (60, 160) is removed from the main housing (36, 136) through the top opening (46, 146),
**characterized in that** the collection device (34, 134) is reusable and is formed by a drawer suitable to slide in the main housing (36, 136) between the assembled position and the disassembled position.

2. Coffee machine (10) according to claim 1, wherein the collection device (34, 134) comprises an axial projection (62, 162) extending from the residue collection container (60, 160) and defining a gripping area (64, 164) suitable to be grasped by a user to move the collection device (34, 134) relative to the main housing (36, 136) between the assembled position and the disassembled position.

3. Coffee machine (10) according to claim 2, wherein the height of the residue collection container (60, 160) is less than the height of the axial projection (62, 162), preferably at least two times smaller, preferably even at least three times smaller.

4. Coffee machine (10) according to claim 2 or 3, wherein when the collection device (34, 134) is in the assembled position, an upper end of the axial projection (62, 162) forming the gripping area (64, 164) is accessible to the user, with the upper end extending at least a portion (80, 180) beyond a border (82, 182) of the top opening (46, 146).

5. Coffee machine (10) according to any of the preceding claims, wherein the main body (32, 132) comprises a bottom opening (48, 148), the main housing (36, 136) being through-going and extending along the longitudinal axis (X32, X132) between the bottom opening (48, 148) and the top opening (46, 146), and wherein the residue collection container (60, 160) seals the bottom opening (48, 148) when the collection device (34, 134) is in the assembled position.

6. Coffee machine (10) according to any of the preceding claims, wherein the main body (32, 132) comprises one or more peripheral walls (38, 40, 42, 44, 138, 140, 142, 144) forming a contour of the main housing (36, 136), the height of the residue collection container (60, 160) being less than the height of the one or more peripheral walls (38, 40, 42, 44, 138, 140, 142, 144), preferably at least three times smaller.

7. Coffee machine (10) according to any of the preceding claims, wherein the main body (132) comprises one or more peripheral walls (138, 140, 142, 144) forming a contour of the main housing (136), and wherein one or more of the peripheral walls (138, 140, 142, 144) includes an outer face equipped with engaging features (200) for a cover element (198) on said outer face.

8. Coffee machine (10) according to any of the preceding claims, wherein the main housing (36, 136) is equipped with at least one rail (50, 52, 150) for translational guidance of the collection device (34, 134) suitable to cooperate with a side wall (72, 74, 76, 78, 172, 174, 176, 178) of the residue collection container (60, 160).

9. Coffee machine (10) according to any of the preceding claims, wherein the main body (32, 132) comprises one or more peripheral walls (38, 40, 42, 44, 138, 140, 142, 144) forming a contour of the main housing (36, 136), and wherein the residue collection container (60, 160) comprises one or more side walls (72, 74, 76, 78, 172, 174, 176, 178) configured to rub against an internal face (381, 40I, 421, 44I, 1381, 1401, 1421, 144I) of the peripheral walls (38, 40, 42, 44, 138, 140, 142, 144) when the collection device (34, 134) is moved from the assembled position to the disassembled position.
